# FASCICULE DE BREVET EUROPEEN

(11) **EP 3 423 770 B1**
(45) Date de publication et mention de la délivrance du brevet: **12.05.2021**
(21) Numéro de dépôt: 17709159.2
(22) Date de dépôt: 17.02.2017
(51) Int. Cl.: F28D 1/03, B60H 1/00, F25B 39/02, F28D 20/02, F28D 20/00

(54) **RESERVOIR DE MATÉRIAU A CHANGEMENT DE PHASE MUNI D'UN TUBE DE REMPLISSAGE DUDIT RÉSERVOIR, POUR UN ÉCHANGEUR DE CHALEUR D'UNE INSTALLATION DE CONDITIONNEMENT D'AIR D'UN VÉHICULE AUTOMOBILE**
VORRATSBEHÄLTER FÜR PHASENWECHSELMATERIAL MIT EINEM FÜLLROHR ZUM BEFÜLLEN DESSELBEN FÜR EINEN WÄRMETAUSCHER EINER KRAFTFAHRZEUG-KLIMAANLAGE
RESERVOIR OF PHASE-CHANGE MATERIAL EQUIPPED WITH A FILLING TUBE FOR FILLING THE SAID RESERVOIR, FOR A HEAT EXCHANGER OF A MOTOR VEHICLE AIR CONDITIONING INSTALLATION

(30) Priorité: 01.03.2016 FR 1600339
(43) Date de publication de la demande: 09.01.2019
(73) Titulaire: Valeo Systemes Thermiques, 78320 Le Mesnil Saint Denis (FR)
(72) Inventeur: MOREAU, Sylvain, 72700 Spay (FR); ROBILLON, Lionel, 72230 Mulsanne (FR); TISON, Frédéric, 72230 Guecelard (FR); HOGER, Patrick, 72430 Ferce Sur Sarthe (FR); MARTIN, Frédéric, 72430 Chantenay-villedieu (FR); QUISTINIC, Erwann, 72230 Guecelard (FR)
(74) Mandataire: Bialkowski, Adam
(86) Numéro de dépôt international: PCT/FR2017/050358
(87) Numéro de publication internationale: WO 2017/149218

(56) Documents cités:
- WO-A1-2014/208535
- FR-A1- 3 007 514
- JP-A- H0 674 602
- US-A1- 2011 239 696
- US-A1- 2013 284 395
- US-A1- 2014 174 121

## Description

La présente invention est du domaine des échangeurs de chaleur équipant les véhicules automobiles, notamment un évaporateur. L'échangeur de chaleur de la présente invention relève plus spécifiquement de ceux comportant au moins un réservoir de stockage d'un matériau à changement de phase (PCM). Un tel réservoir constitue typiquement un organe intermédiaire de transfert de chaleur, en étant interposé entre deux conduits d'acheminement d'un fluide réfrigérant à travers l'échangeur de chaleur.

Les véhicules automobiles sont couramment équipés d'une installation de ventilation, de chauffage et/ou de climatisation, dite aussi installation de conditionnement d'air. Une telle installation est notamment dédiée au traitement de l'air contenu dans l'habitacle du véhicule, pour son renouvellement et/ou pour son chauffage ou inversement pour son refroidissement en fonction du confort souhaité par les passagers.

A cet effet, l'installation comprend typiquement un circuit fermé de climatisation dans lequel circule un fluide réfrigérant alimentant un ou plusieurs échangeurs de chaleur, tel que notamment au moins un évaporateur. Successivement suivant le sens de circulation du fluide à son travers, le circuit de climatisation comprend essentiellement un compresseur, un condenseur ou refroidisseur de gaz, un détendeur et l'évaporateur. Le fluide est ainsi comprimé en phase gazeuse par le compresseur, transformé en phase liquide dans le condenseur ou simplement refroidi par le refroidisseur de gaz, détendu à basse pression par le détendeur puis transformé en phase gazeuse dans l'évaporateur et à nouveau acheminé vers le compresseur.

Un échangeur de chaleur équipant une installation de conditionnement d'air d'un véhicule automobile comporte couramment un faisceau de conduits. Les conduits sont chacun agencés en tube formé entre deux plaques de conduit adjacentes. Les conduits sont disposés parallèlement à distance les uns des autres pour ménager entre eux un espace de circulation de l'air à traiter thermiquement. Les conduits sont couramment montés en parallèle entre une conduite d'admission et une conduite d'évacuation du fluide réfrigérant, respectivement à l'intérieur et hors de l'échangeur de chaleur.

Ainsi en ce qui concerne un tel échangeur de chaleur à fonction d'évaporateur, le fluide réfrigérant admis à l'intérieur de l'échangeur de chaleur circule à travers les conduits puis est évacué hors de l'échangeur de chaleur vers le compresseur. L'air à refroidir cède des calories par suite de sa circulation à travers les espaces ménagés entre les conduits. Des intercalaires sont interposés entre les conduits pour augmenter la surface d'échange thermique avec le flux d'air.

Dans ce contexte, la présente invention s'inscrit dans le cadre des difficultés liées au refroidissement de l'air circulant à travers l'évaporateur. En effet, le compresseur est couramment entraîné par le moteur propulsif du véhicule. Lorsque le moteur est arrêté, la circulation du fluide réfrigérant est interrompue et l'échange thermique entre l'évaporateur et l'air à refroidir se dégrade significativement. Or, les véhicules automobiles sont de plus en plus équipés de systèmes d'arrêt automatique du moteur propulsif lorsque la progression du véhicule est momentanément interrompue.

Pour remédier à cet inconvénient, il est connu d'équiper les échangeurs de chaleur, évaporateur plus spécifiquement, d'au moins un réservoir de stockage d'un matériau à changement de phase. Un tel matériau à changement de phase est communément désigné par PCM, d'après l'acronyme anglais Phase Change Material. Ainsi, lorsque le circuit de climatisation fonctionne, le matériau à changement de phase cède des calories au fluide réfrigérant, en se solidifiant. L'arrêt de l'entraînement du compresseur par le moteur propulsif du véhicule induit l'arrêt du fonctionnement du circuit de climatisation. Le flux d'air traversant l'échangeur de chaleur est alors refroidi au contact du ou des réservoirs contenant le matériau à changement de phase, qui prélève des calories dans le flux d'air en se liquéfiant.

Un évaporateur qui illustre ce contexte est divulgué par le document WO2013125533A1 (SANDEN Corp.). Le réservoir divulgué dans ce document est ménagé entre deux plaques de réservoir agencées en demi-coques et respectivement en contact contre deux conduits dans lesquels circule un fluide. Pour remplir le réservoir, les plaques de réservoir comportent chacun un bec formant un canal de remplissage du matériau à changement de phase.

Le document FR3014183A1 (VALEO SYSTEMES THERMIQUES) divulgue un autre évaporateur adapté au contexte présenté ci-dessus. Les conduits de fluide sont délimités par deux plaques de conduit et une plaque intermédiaire est interposée entre deux conduits. Le réservoir de PCM est alors constitué par l'espace formé entre la plaque intermédiaire et une plaque de conduit.

Les conceptions présentées ci-dessus souffrent d'un inconvénient relatif au remplissage du réservoir de stockage du matériau à changement de phase. En effet, les becs de remplissage du WO2013125533A1 ne sont pas transposable dans l'évaporateur montré dans le document FR3014183A1, car le réservoir de matériau à changement de phase du premier document est délimité par deux plaques dédiées au réservoir, alors le second document ne comporte qu'une seule plaques.

Dans ce contexte, la présente invention a pour objet un réservoir d'un matériau à changement de phase pour un échangeur de chaleur équipant une installation de conditionnement d'air d'un véhicule automobile selon le préambule de la revendication 1. FR 3 007 514 divulgue un tel réservoir

. La présente invention a aussi pour objet un tel échangeur de chaleur comportant un ou plusieurs réservoirs conformes à la présente invention. La présente invention a aussi pour objet un procédé de remplissage d'un réservoir conforme à la présente invention par un matériau à changement de phase.

Le but principal visé par la présente invention est d'améliorer les conditions de remplissage du réservoir, tout en optimisant sa capacité pour un encombrement donné entre les plaques de conduit respectives de deux conduits adjacents. Une telle amélioration est notamment recherchée en évitant de modifier la structure des plaques de conduit, souhaitée commune pour l'ensemble des plaques de conduit équipant l'échangeur de chaleur en présence ou non d'un réservoir interposé entre elles.

Les améliorations recherchées sont aussi souhaitées en confortant l'étanchéité du réservoir dans le contexte des variations de température auxquelles le réservoir est soumis en fonctionnement et susceptibles d'affecter la stabilité de sa structure.

Il doit aussi être tenu compte des contraintes économiques auxquelles sont notoirement soumis les équipementiers des véhicules automobiles. Les coûts de production de l'échangeur thermique ne doivent pas être économiquement rédhibitoires au regard des avantages procurés. Il en est ainsi en ce qui concerne plus spécifiquement le réservoir et l'échangeur thermique faisant l'objet de la présente invention, notamment au regard de la structure du réservoir et des modalités de son installation sur l'échangeur thermique, ainsi qu'au regard des modalités mises en œuvre pour son remplissage.

Le réservoir à PCM de la présente invention est organisé pour constituer un composant d'un échangeur de chaleur d'une installation de conditionnement d'air d'un véhicule, notamment automobile. Le réservoir est pourvu d'un moyen de remplissage.

Dans ce contexte, le réservoir de la présente invention comporte les caractéristiques de la revendication 1.

Le canal de remplissage est disposé latéralement par rapport au réservoir, c'est-à-dire à côté de celui-ci et en contact contre une face externe de la première plaque délimitant le réservoir. La notion de « latérale » définie une disposition du canal de remplissage contre la première plaque de réservoir parallèlement au plan général de cette plaque. Le canal de remplissage est ainsi principalement orienté suivant une largeur de la première plaque délimitant le réservoir, et peut procurer une émergence du moyen de remplissage hors de l'échangeur de chaleur, c'est-à-dire au-delà d'un plan définissant une face d'entrée ou de sortie du flux d'air du faisceau de conduits constitutif de l'échangeur de chaleur. La position extérieure au réservoir canal de remplissage implique sa localisation hors du volume du réservoir délimité entre les deux plaques de réservoir, le canal d'alimentation reliant un volume intérieur du canal de remplissage avec un volume intérieur du réservoir.

Le réservoir comprend avantageusement l'une quelconque des caractéristiques suivantes, prise seule ou en combinaison :
- le canal de remplissage s'étend dans un plan principal orienté parallèlement à un plan général des plaques de réservoir, le canal d'alimentation s'étendant selon un axe orienté transversalement au plan général des plaques de réservoir,
- selon l'invention, le canal d'alimentation est formé par des ouvertures communiquant entre elles et ménagées respectivement à travers le tube et à travers la première plaque de réservoir. Les ouvertures peuvent être aisément réalisées par usinage, ou plus avantageusement par emboutissage lors de la formation de la première plaque de réservoir,
- un moyen de positionnement du tube sur la première plaque de réservoir est prévu,
- le moyen de positionnement est formé par au moins un collet bordant au moins une première ouverture et emboîté à l'intérieur d'une deuxième ouverture. Un tel collet peut être formé par refoulement de matière issue de la deuxième ouverture lors de la fabrication de la première plaque de réservoir par emboutissage,
- le collet est ménagé en saillie de la première plaque de réservoir vers l'extérieur du réservoir. De manière similaire mais inversée, le collet est ménagé en saillie d'une face extérieure du canal de remplissage, pour pénétrer dans l'ouverture ménagée dans la première plaque délimitant le réservoir. Lors de la mise en place du canal de remplissage en application contre la première plaque de réservoir, le collet est introduit à l'intérieur de l'ouverture que comporte le tube pour ménager le canal d'alimentation,
- le moyen de positionnement est configuré pour qu'un axe longitudinal du canal de remplissage soit transversal, notamment perpendiculaire, à un axe longitudinal des plaques de réservoirs. Il peut être prévu une série de passages délimités par les ouvertures, par exemple de section circulaire. Alternativement, un unique passage peut être prévu. De manière complémentaire mais optionnelle, un tel passage peut présenter une section oblongue. Dans les deux cas mentionnés ici, on assure un pré-positionnement angulaire du moyen de remplissage par rapport au réservoir et on garantit que le moyen de remplissage est accessible depuis l'extérieur de l'échangeur de chaleur, après brasage de celui-ci,
- le tube est rapporté contre une assise ménagée à la face extérieure de la première plaque de réservoir,
- l'assise délimite une chambre d'alimentation du réservoir depuis le canal d'alimentation vers une réserve s'étendant en prolongement de la chambre d'alimentation, suivant un plan d'extension longitudinale de la première plaque de réservoir,
- des dimensions cumulées de la chambre d'alimentation et du canal de remplissage sont au plus égales à une dimension de la réserve, mesurées suivant une direction perpendiculaire au plan général de la première plaque de réservoir,
- le moyen de remplissage comprend au moins un embout de raccordement qui s'étend au-delà d'une dimension transversale des plaques de réservoir et qui est configuré pour mettre en communication le canal de remplissage avec un circuit extérieur d'approvisionnement du réservoir en matériau à changement de phase. On relèvera que l'émergence d'une partie proximale de l'embout de raccordement hors du volume délimité entre les plaques de réservoir autorise son libre agencement pour se raccorder au circuit d'approvisionnement, indépendamment de l'agencement du canal de remplissage,
- une extrémité distale du canal de remplissage est fermée par déformation de ses bords, notamment par rapprochement de ceux-ci et brasage, une extrémité proximale de l'embout de raccordement étant fermée indifféremment par apport d'un bouchon ou par déformation de ses bords, notamment par rapprochement de ceux-ci et brasage,
- l'extrémité distale du canal de remplissage est aplatie de manière à former un bord de fermeture parallèle au plan général de la première plaque de réservoir.
- la première plaque de réservoir est agencée en coque ouverte sur la deuxième plaque de réservoir, la coque délimitant le volume du réservoir et étant scellée, notamment brasée, par son bord périphérique entourant le volume du réservoir à la deuxième plaque de réservoir,
- le réservoir est agencé en une pluralité de niches, par exemple ménagées par des alvéoles formées par des reliefs que comporte la première plaque de réservoir,
- le canal de remplissage est rapporté par scellement, notamment par brasage, par exemple de manière simultanée avec le faisceau de conduits, contre la première plaque de réservoir.

Ainsi, le canal de remplissage constitutif du moyen de remplissage du réservoir est un organe rapporté distinct des plaques de réservoir ménageant entre elles le réservoir. Les modalités de remplissage du réservoir en PCM peuvent être librement et spécifiquement organisées par suite d'une telle distinction structurelle entre le tube et les plaques de réservoir ménageant le réservoir. En outre, le canal de remplissage étant rapporté contre la première plaque de réservoir, un agencement spécifique d'une seule des plaques de réservoir est nécessaire pour aménager le moyen de remplissage du réservoir. Par suite, l'agencement de la deuxième plaque de réservoir, délimitant le volume interne du réservoir avec la première plaque de réservoir, est rendu librement disponible.

Ainsi, la deuxième plaque de réservoir peut être avantageusement constituée d'une plaque de conduit constitutive de l'échangeur de chaleur identique à l'ensemble des plaques de conduits de l'échangeur de chaleur. Pour rappel, une telle plaque de conduit ménage avec une autre plaque de conduit adjacente un conduit de l'échangeur de chaleur acheminant un fluide, notamment réfrigérant, procurant un échange thermique entre le fluide, le PCM et l'air.

Il en résulte finalement une liberté d'organisation des modalités de remplissage du réservoir et une optimisation de l'échange thermique entre le réservoir et les conduits de l'échangeur de chaleur entre lesquels le réservoir est interposé.

Selon une forme simple de réalisation, le canal d'alimentation est formé par des ouvertures ménagées respectivement à travers le tube et à travers la première plaque de réservoir. Lesdites ouvertures sont communiquant entre elles par aboutement l'une à l'autre suivant l'orientation de leur débouché transversalement, et plus particulièrement perpendiculairement, au plan général des plaques de réservoir.

La présente invention a aussi pour objet un échangeur de chaleur, notamment utilisé en tant qu'évaporateur d'une installation de conditionnement d'air d'un véhicule, notamment automobile. L'échangeur de chaleur de la présente invention est principalement reconnaissable en ce qu'il est muni d'au moins un réservoir de stockage d'un matériau à changement de phase tel qu'il vient d'être décrit conformément à la présente invention. Bien entendu, l'échangeur de chaleur comporte de préférence une pluralité de réservoirs à PCM conforme à la présente invention, chacun interposés entre deux conduits de l'échangeur de chaleur acheminant un fluide, par exemple réfrigérant, dédié au refroidissement d'un flux d'air traversant l'échangeur de chaleur.

Plus particulièrement par suite de l'installation du réservoir à PCM dans l'échangeur de chaleur, la deuxième plaque de réservoir est avantageusement constituée d'une première plaque de conduit de l'échangeur de chaleur identique à l'ensemble des plaques de conduits que comporte l'échangeur de chaleur. Pour rappel, une telle première plaque de conduit ménage classiquement avec une deuxième plaque de conduit adjacente un premier conduit participant d'un faisceau de conduits dédiés à la circulation d'un fluide à travers l'échangeur de chaleur.

La première plaque de réservoir est de préférence apposée, bien entendu suivant son plan général, contre une troisième plaque de conduit. La troisième plaque de conduit ménage avec une quatrième plaque de conduit adjacente un deuxième conduit du faisceau de conduits. Ainsi, le réservoir est placé directement en contact avec deux plaques de conduit ménageant des conduits respectifs adjacents de l'échangeur de chaleur. La performance de l'échange thermique entre les plaques de conduit et le réservoir est ainsi optimisée. La capacité du réservoir est optimisée suivant sa dimension orientée perpendiculairement aux plaques de conduit. Le temps de d'action et de réaction du matériau à changement de phase est également amélioré par une telle conception. Le réservoir peut être aisément interposé entre deux plaques de conduit en remplacement d'un intercalaire équipant les échangeurs de chaleur pour favoriser l'échange thermique entre l'air à refroidir et l'échangeur de chaleur.

L'invention couvre également le cas où au moins un premier conduit de circulation de fluide est délimité par au moins une première plaque de conduit et par une deuxième plaque de conduit, ainsi qu'un deuxième conduit délimité par une troisième plaque de conduit et par une quatrième plaque de conduit, et dans lequel la deuxième plaque de réservoir est distincte de l'une quelconque des plaques de conduits.

La présente invention a aussi pour objet un procédé de remplissage d'un réservoir de stockage de matériau à changement de phase conforme à la présente invention que comporte un échangeur de chaleur tel qu'il vient d'être décrit.

On relèvera que le procédé de la présente invention est proposé par distinction des procédés habituellement mis en œuvre pour remplir un réservoir à PCM installé sur un échangeur de chaleur, notamment utilisé en tant qu'évaporateur, équipant les installations de conditionnement d'air pour les véhicules automobiles. Il est ainsi compris que l'organisation du réservoir de la présente invention autorise son remplissage par tout autre procédé que celui avantageusement proposé par la présente invention. Il est cependant constaté que les procédés habituellement exploités pour remplir le remplissage du réservoir peuvent rendre aléatoire l'optimisation de son remplissage.

En effet, le réservoir de la présente invention est de préférence agencé en une pluralité de niches ménagées par des alvéoles formées par des reliefs que comporte la première plaque de réservoir. Les reliefs sont avantageusement intégrés à la coque lors de sa formation par emboutissage. Un tel agencement alvéolé du réservoir procure une répartition homogène du PCM à l'intérieur du réservoir. Dans ce contexte, le remplissage optimisé de chacune des alvéoles du réservoir par le PCM est délicat à obtenir.

L'organisation du réservoir de la présente invention permet avantageusement d'opérer, selon un procédé relevant de la présente invention, un remplissage du réservoir par aspiration du PCM depuis le réservoir, par suite de sa mise en dépression préalable.

Plus particulièrement et pour exemple, le procédé de la présente invention comprend les opérations suivantes :
-) raccorder le canal de remplissage à un appareil générateur de dépression, une pompe à vide notamment. Le canal de remplissage est raccordé à l'appareil générateur de dépression par l'intermédiaire d'une extrémité ouverte du canal de remplissage, notamment formée par son extrémité proximale agencée en embout de raccordement au circuit d'approvisionnement du réservoir en PCM.
-) mettre en dépression le réservoir par aspiration de l'air qu'il contient à travers le canal d'alimentation et le canal de remplissage. Ladite aspiration est bien évidemment procurée par la mise en œuvre de l'appareil générateur de dépression préalablement raccordée au canal de remplissage par l'intermédiaire de l'embout de raccordement.
-) rompre la communication fluidique entre le canal de remplissage et l'appareil générateur de dépression. Une telle rupture de communication peut par exemple être opérée au moyen d'une vanne procurant sélectivement la mise en communication du réservoir d'une part avec l'appareil générateur de dépression pour sa mise sous vide, et d'autre part avec une source de matériau à changement de phase pour son remplissage.
-) placer le tube en communication avec ladite source de matériau à changement de phase. Tel que précédemment mentionné, la mise en communication entre le canal de remplissage et la source de PCM peut être opérée par l'intermédiaire de la vanne interposée entre l'appareil générateur de dépression et la source de PCM. Une telle mise en communication provoque par aspiration le remplissage du réservoir depuis la source de PCM sous l'effet de sa mise en dépression préalable.
-) rompre la communication entre le canal de remplissage et la source de PCM, puis obturer l'extrémité ouverte du canal de remplissage, notamment formée par son extrémité proximale.

Il est compris que le circuit d'approvisionnement du réservoir en PCM comprend un circuit de dépressurisation comportant l'appareil générateur de dépression. Par rapport au réservoir, le circuit de dépressurisation est notamment placé en parallèle avec un circuit de délivrance du PCM comportant la source de PCM. Le circuit de dépressurisation et le circuit de délivrance du PCM sont alternativement mis en communication avec le réservoir par l'intermédiaire de ladite vanne.

D'autres caractéristiques, détails et avantages de la présente invention ressortiront plus clairement à la lecture de la description donnée ci-après à titre indicatif, en relation avec les exemples de réalisation de l'invention illustrés sur les figures des planches annexées, dans lesquelles :
- la figure 1 est une vue en perspective d'un échangeur de chaleur conforme à la présente invention,
- la figure 2 et la figure 3 sont des illustrations en perspective de composants de l'échangeur de chaleur représenté sur la figure 1, respectivement en vue éclatée et en vue assemblée,
- la figure 4 est composée de trois schémas (a), (b) et (c) illustrant successivement des modalités d'assemblage entre des composants d'un réservoir à PCM conforme à la présente invention, que comporte l'échangeur de chaleur représenté sur la figure 1,
- la figure 5 est composée de quatre schémas (d), (e), (f) et (g) illustrant successivement un procédé de remplissage du réservoir à PCM représenté sur la figure 3.

Il faut tout d'abord noter que les figures exposent la présente invention de manière détaillée et selon des modalités particulières de sa mise en œuvre. Lesdites figures et leur description peuvent bien entendu servir le cas échéant à mieux définir la présente invention, tant dans ses particularités que dans sa généralité, notamment en relation avec la description de la présente invention qui est faite dans le présent document.

Par ailleurs, pour clarifier et rendre aisée la lecture de la description qui va être faite de la présente invention en relation avec les figures des planches annexées, les organes communs représentés sur les différentes figures sont respectivement identifiés dans les descriptions propres à ces figures avec les mêmes numéros et/ou lettres de référence, sans impliquer leur représentation individuelle sur chacune des figures et/ou un agencement identique desdits organes communs entre des formes spécifiques de réalisation.

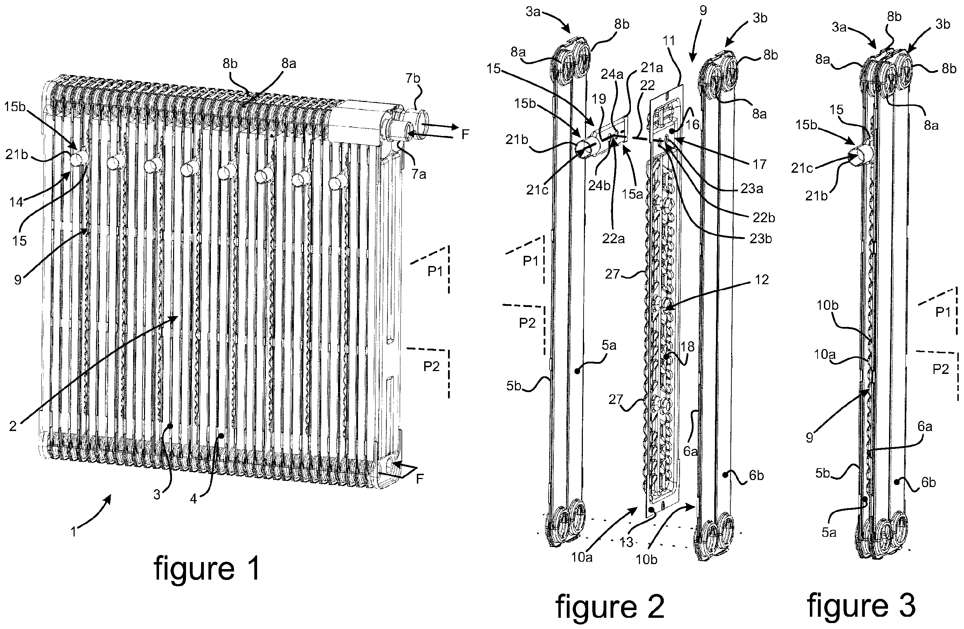

Sur la figure 1, un échangeur de chaleur 1 conforme à la présente invention équipe une installation de conditionnement d'air d'un véhicule automobile. L'échangeur de chaleur 1 illustré est plus spécifiquement utilisé en tant qu'évaporateur dédié au refroidissement d'un flux d'air envoyé dans l'habitacle du véhicule. La description ci-dessous est faite en rapport avec un échangeur de chaleur, mais il est clair que toutes les dispositions décrites ici s'appliquent de manière préférée à un évaporateur.

L'échangeur de chaleur 1 comporte un faisceau de conduits 2, les conduits 3 du faisceau de conduits 2 étant destinés à acheminer un fluide F configuré pour capter des calories en vue de refroidir le flux d'air. Un tel fluide peut être un fluide caloporteur, mais il peut également s'agir d'un fluide réfrigérant, par exemple diphasique. Les conduits 3 du faisceau de conduits 2 sont chacun agencés en tube en étant individuellement ménagés entre deux plaques de conduits, tel que par exemple illustré sur la figure 2 et la figure 3. Des intercalaires 4, agencés en ailettes par exemple, sont placés entre la plupart des conduits 3 pour augmenter la surface d'échange thermique entre l'air à refroidir et l'échangeur de chaleur 1.

Plus particulièrement, la figure 2 et la figure 3 illustrent deux conduits adjacents 3a, 3b du faisceau de conduits 2 équipant l'échangeur de chaleur représenté sur la figure 1. Les conduits 3a, 3b sont chacun formés entre deux plaques de conduit 5a, 5b et 6a, 6b qui s'étendent principalement suivant leur plan général P1, parallèlement entre elles et perpendiculairement au plan général P2 de l'échangeur de chaleur 1. Tel qu'illustré sur la figure 3, les conduits 3a et 3b sont disposés parallèlement à distance les uns des autres pour ménager entre eux un espace de circulation de l'air à traiter thermiquement.

Sur la figure 1 notamment, les conduits 3 sont montés en parallèle, vu du fluide F, entre une conduite d'admission 7a et une conduite d'évacuation 7b du fluide F. La conduite d'admission 7a et la conduite d'évacuation 7b comprennent des passages de fluide 8a, 8b respectifs ménagés à travers les plaques de conduit et aboutés successivement les uns aux autres lorsque les conduits 3 sont assemblés entre eux.

Le fluide F est admis à l'intérieur de l'échangeur de chaleur 1 à travers la conduite d'admission 7a, circule à travers les conduits 3 puis est évacué hors de l'échangeur de chaleur 1 à travers la conduite d'évacuation 7b. Les conduits 3 sont agencés en deux passes de circulation de fluide parallèles, reliées entre elles à la base de l'échangeur de chaleur opposée à son sommet comportant la conduite d'admission 7a et la conduite d'évacuation 7b. A cet effet, les plaques de conduit 5a, 5b et/ou 6a, 6b sont cloisonnées suivant leur plus grande dimension pour ménager l'une et l'autre des passes de fluide. Cette plus grande dimension définie un axe longitudinal dans lequel les conduits s'étendent.

Par ailleurs, l'échangeur de chaleur 1 comporte une pluralité de réservoirs 9 contenant un matériau à changement de phase, dénommé dans le présent document PCM. De tels réservoirs 9 permettent de refroidir l'air circulant à travers l'échangeur de chaleur 1 en l'absence de circulation du fluide F dans les conduits 3. Chaque réservoir 9 est interposé en contact entre deux plaques de conduit participantes de la formation respectives de deux conduits 3 adjacents. Ainsi, les réservoirs 9 sont disposés entre deux conduits 3 adjacents en remplacement d'intercalaires 4, à cet effet absents de l'échangeur de chaleur 1. Les réservoirs 9 sont chacun munis d'un moyen 14 pour leur remplissage en PCM lorsqu'il est installé sur l'échangeur de chaleur 1.

Plus particulièrement sur les figures 2 à 4, un réservoir 9 équipant l'échangeur de chaleur 1 représenté sur la figure 1 est ménagé entre deux plaques de réservoir 10a, 10b adjacentes, orientées parallèlement l'une par rapport à l'autre. Une première plaque de réservoir 10a est agencée en coque 11 dont l'une des faces 12 est ouverte vers une deuxième plaque de réservoir 10b. La première plaque de réservoir 10a est brasée par l'intermédiaire de son bord périphérique 13 contre la deuxième plaque de réservoir 10b.

La deuxième plaque de réservoir 10b est susceptible d'être constituée d'une plaque de réservoir exclusivement dédiée au réservoir 9 et prévue pour être apposée contre une plaque de conduit de l'échangeur de chaleur 1 voisine, telle que notamment la plaque de conduit 6a du conduit 3b. On relèvera cependant que selon un avantage procuré par la présente invention, la deuxième plaque de réservoir 10b est avantageusement constituée d'une première plaque de conduit 6a ménageant un conduit 3 de l'échangeur de chaleur 1, tel que le conduit 3b selon la forme préférée de réalisation de l'invention.

Plus particulièrement, la première plaque de conduit 6a ménage, avec une deuxième plaque de conduit 6b adjacente, un premier conduit 3b de l'échangeur de chaleur 1. La première plaque de réservoir 10a constituée de la coque 11 est avantageusement directement apposée contre une troisième plaque de conduit 5a ménageant, avec une quatrième plaque de conduit 5b adjacente, un deuxième conduit 3a de l'échangeur de chaleur 1. On comprend donc que selon cette variante, le réservoir 9 est délimité d'un côté par la première plaque de réservoir 10a et par la première plaque de conduit 6a, celle-ci formant un mode de réalisation de la deuxième plaque de réservoir 10b.

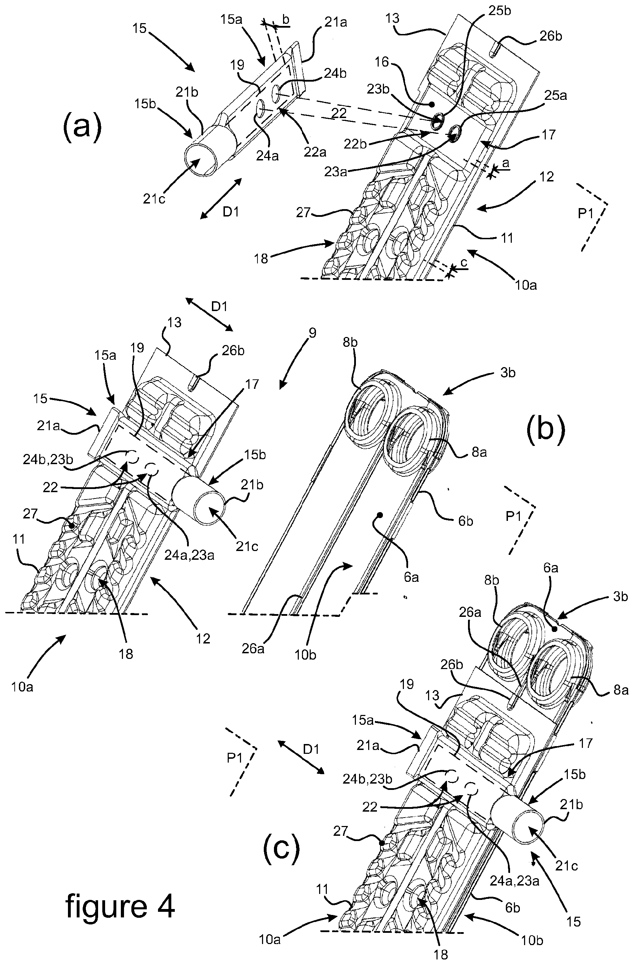

Pour le remplissage du réservoir 9, un tube 15 est rapporté latéralement et fixé par brasage contre une assise 16 plane ménagée à la face extérieure de la coque 11. L'assise 16 s'étend en saillie vers l'extérieur de la première plaque de réservoir 10a perpendiculairement à son plan général P1. L'assise 16 délimite une chambre d'alimentation 17 (figure 4) du réservoir 9 en PCM, ménagée suivant le plan général P1 de la première plaque de réservoir 10a en prolongement d'une réserve 18 à PCM formant la majeure partie du réservoir 9.

On notera que le tube 15 décrit ci-après forme une enveloppe du canal de remplissage 19, ces derniers étant constitutifs du moyen 14 de remplissage du réservoir 9 de stockage de PCM. Le canal de remplissage 19 est alors un volume entouré par le tube 15, ce volume étant rempli par le matériau à changement de phase.

Le tube 15 s'étend parallèlement au plan général de la première plaque de réservoir 10a, en étant orienté selon son axe longitudinal perpendiculairement au plan général P2 de l'échangeur de chaleur 1, tel qu'illustré sur la figure 1.

Plus particulièrement sur les schémas de la figure 4, le tube 15 forme, entre ses extrémités suivant sa direction D1 générale d'extension illustrant son axe longitudinal, le canal de remplissage 19 à travers lequel le PCM peut être admis vers le réservoir 9 pour son remplissage. On remarquera, lorsque le tube 15 est installé sur la première plaque de réservoir 10a, et que le tube 15 est orienté suivant sa direction D1 et parallèlement à la plus petite dimension de la première plaque de réservoir 10a, considérée dans son plan général P1. En d'autres termes, l'axe longitudinal du tube 15 est parallèle à la direction transversale du réservoir 9.

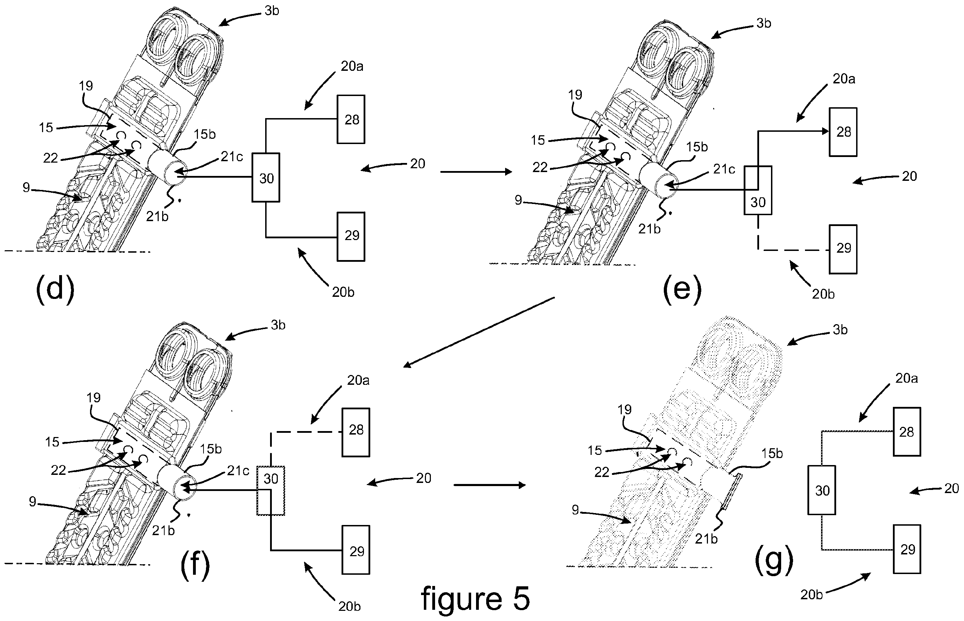

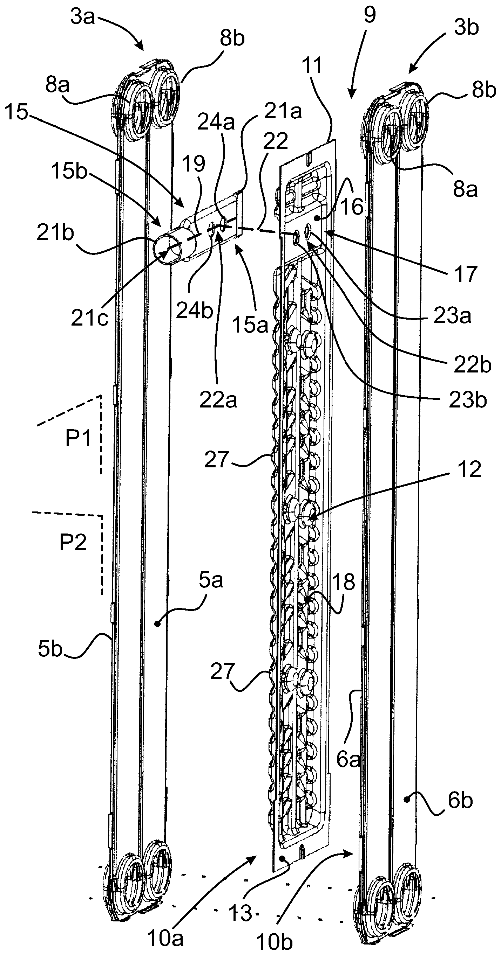

Une partie distale 15a du tube est logée entre les plaques de réservoir 10a, 10b et forme un organe de jonction par brasage du tube 15 contre l'assise 16 ménagée sur la première plaque de réservoir 10a. La partie distale 15a du tube 15 est prolongée par une partie proximale 15b agencée en embout de raccordement du réservoir 9 à un circuit d'approvisionnement 20 (figure 5) du réservoir 9 en PCM. L'embout de raccordement 15b du moyen 14 de remplissage est émergeant hors du faisceau de conduits 2 de l'échangeur de chaleur 1, perpendiculairement à son plan général P2 tel qu'illustré sur la figure 1. Les notions de distal et de proximal sont communément comprises comme étant des notions relatives opposées par rapport à une direction donnée d'extension d'un organe. Bien entendu en ce qui concerne le tube, ladite direction donnée est identifiée tel que visé entre les extrémités du tube.

L'extrémité distale 21a du tube 15 formant le canal de remplissage 9 est fermée par déformation et scellement de ses bords entre eux, notamment par rapprochement de ses bords et brasage. Une extrémité proximale 21b de l'embout de raccordement 15b ménage une bouche 21c d'admission du PCM à l'intérieur du tube 15 lors du remplissage du réservoir 9. La bouche 21c est maintenue ouverte dans l'attente du remplissage du réservoir 9, et est fermée après remplissage du réservoir 9 tel qu'illustré sur le schéma (g) de la figure 5. L'obturation de la bouche 21c peut être réalisée au moyen d'un bouchon rapporté ou, tel qu'illustré, par déformation et scellement entre eux des bords de l'extrémité proximale 21b de l'embout de raccordement 15b. Ici aussi, la fermeture de cette extrémité proximale 21b de l'embout de raccordement 15 est opérée par rapprochement des bords et brasage de ceux-ci.

Le canal de remplissage 19 communique avec la chambre d'alimentation 17 par l'intermédiaire d'un canal d'alimentation 22. Le canal d'alimentation 22 s'étend perpendiculairement au plan général P1 de la première plaque de réservoir 10a, en étant formé par des ouvertures 22a, 22b communiquant entre elles et respectivement ménagées à travers le tube 15 et à travers l'assise 16. Les ouvertures 22a, 22b sont chacune composées de deux trous 23a, 23b et 24a, 24b adjacents. La pluralité de trous 23a, 23b et 24a, 24b formant respectivement les ouvertures 22a, 22b permet de mettre à profit les ouvertures 22a, 22b pour pré-positionner le tube 15 sur la première plaque de réservoir 10a, notamment pour empêcher une rotation du moyen 14 de remplissage pendant l'opération de brasage de l'échangeur de chaleur.

A cet effet sur le schéma (a) de la figure 4, les trous 23a, 23b sont chacun bordés par un collet 25a, 25b. Les collets 25a, 25b sont respectivement emboîtables à l'intérieur des trous 24a, 24b ménagés à travers le tube 15. Ainsi, le tube 15 est rigoureusement positionné contre l'assise 16 et maintenu en position par suite de son brasage sur la première plaque de réservoir 10a.

L'extrémité distale 21a du tube 15 est aplatie en générant un effort perpendiculaire au plan général P1 de la première plaque de réservoir 10a. Perpendiculairement au plan général P1 de la première plaque de réservoir 10a, les dimensions cumulées a, b respectivement de la chambre d'alimentation 17 et du tube 15, sont au plus égales à la dimension c d'une réserve 18 de PCM que comporte le réservoir 9. Ainsi, le tube 15 interposé entre la première plaque de réservoir 10a et le conduit 3a, ne fait pas obstacle à une apposition directe de la première plaque de réservoir 10a contre la troisième plaque de conduit 5a afin d'optimiser l'échange thermique entre eux.

Sur les schémas (a), (b) et (c) de la figure 4, le réservoir 15 est composé en tout et pour tout de trois éléments de réservoir 10a, 10b, 15 assemblés par brasage entre eux tel qu'illustré sur le schéma (c). Un premier élément de réservoir est formé par la première plaque de réservoir 10a, un deuxième élément de réservoir est formé par la deuxième plaque de réservoir 10b, celle-ci pouvant être une plaque de conduit, et un troisième élément de réservoir est formé par le tube 15 délimitant le canal de remplissage 19.

Successivement sur le schéma (a) puis sur le schéma (b), le tube 15 est positionné sur la première plaque de réservoir 10a en plaçant sa partie distale 15a contre l'assise 16. Les collets 25a, 25b bordant les trous 23a, 23b ménagés à travers l'assise 16 sont respectivement introduits à l'intérieur des trous 24a, 24b ménagés à travers le tube 15.

Ainsi tel qu'illustré sur le schéma (b), un empilement de plaques de conduits et de plaques de réservoir 10a, par exemple équipé du tube 15, peut être effectué.
Successivement sur le schéma (b) puis sur le schéma (c), l'ensemble composé du tube 15 pré-positionné contre la première plaque de réservoir 10a est rapporté puis brasé sur la deuxième plaque de réservoir 10b par l'intermédiaire du bord périphérique 13 de la première plaque de réservoir 10a. On remarquera que la deuxième plaque de réservoir 10b comporte un organe 26a qui partitionne le conduit 3b en deux passes.

L'intégration du réservoir 9 à l'échangeur de chaleur 1 est alors réalisée à partir du montage de la première plaque de conduit 6a constituant avantageusement la deuxième plaque de réservoir 10b.

Le réservoir 9 est placé en interposition entre deux conduits 3a, 3b de l'échangeur de chaleur 1 tel qu'illustré sur la figure 1. La première plaque de réservoir 10a est apposée en contact direct avec la troisième plaque de conduit 5a. On remarquera que la coque 11 comporte des reliefs 27 par l'intermédiaire desquels la première plaque de réservoir 10a prend appui contre la troisième plaque de conduit 5a. De tels reliefs 27 ménagent à l'intérieur du réservoir 9 des alvéoles de réception du PCM réparties dans la réserve 18.

Sur la figure 5, le remplissage du réservoir 9 est opéré après sa solidarisation à l'échangeur de chaleur 1. Le remplissage du réservoir 9 en PCM est réalisé par aspiration à partir d'une mise en dépression préalable du réservoir 9. A cet effet, tel qu'illustré sur le schéma (d), le réservoir 9 est raccordé à un circuit d'approvisionnement 20 en PCM par l'intermédiaire de l'embout de raccordement 15b du tube 15 et dont le débouché est ouvert sur l'extérieur.

Le circuit d'approvisionnement 20 comprend un circuit de dépressurisation 20a et un circuit de délivrance en PCM 20b, montés en parallèle sur le circuit d'approvisionnement 20 par l'intermédiaire d'une vanne 30. Le circuit de dépressurisation 20a comprend un appareil générateur de dépression 28 et le circuit de délivrance en PCM comprend une source de PCM 29.

L'appareil générateur de dépression 28 et la source de PCM 29 sont montés en parallèle sur le circuit d'approvisionnement 20 en étant individuellement raccordés à la vanne 30. La vanne 30 est raccordable au tube 15 par l'intermédiaire de son embout de raccordement 15b à un circuit hydraulique, circuit d'approvisionnement 20 notamment. La vanne 30 permet de mettre le réservoir 9 sélectivement en communication avec l'appareil générateur de dépression 28 ou avec la source de PCM 29.

Ainsi, sur le schéma (e), le réservoir 9 est placé en communication avec l'appareil générateur de dépression 28 par l'intermédiaire de la vanne 30. L'air contenu dans le réservoir 9 est alors aspiré hors du réservoir 9 et est évacué à travers le circuit de dépressurisation 20a. Par suite, le réservoir 9 est dépressurisé, autrement dit mis au vide.

Sur le schéma (f), le réservoir 9 est ensuite placé en communication avec la source de PCM 29 par l'intermédiaire de la vanne 30 et du circuit de délivrance en PCM 20b. Par suite de la mise en dépression préalable du réservoir 9, le PCM est aspiré à travers le circuit d'approvisionnement 20 depuis la source de PCM 29 vers le réservoir 9 pour son remplissage. Ainsi, l'ensemble des alvéoles du réservoir 9 sont efficacement toutes comblées de PCM et l'efficacité de l'échange thermique entre le réservoir 9 et le flux d'air à refroidir en est améliorée.

Sur le schéma (g), le raccordement du tube 15 avec le circuit d'approvisionnement 20 en PCM est rompu et l'extrémité proximale 21b de l'embout de raccordement 15b ménageant la bouche 21c est obturée. Cette obturation est par exemple réalisée, tel qu'illustré, par déformation de ses bords, notamment rapprochement de ceux-ci, et brasage entre eux.

Le matériau à changement de phase utilisé pour remplir le réservoir 9 est à base de paraffine ou peut être encore à base d'un ester d'acide gras saturés dérivé de graisses animales ou végétales.

## Revendications

1. Réservoir (9) de matériau à changement de phase pour un échangeur de chaleur (1) d'une installation de conditionnement d'air d'un véhicule, le réservoir (9) étant ménagé entre deux plaques de réservoir (10a, 10b) et étant pourvu d'un moyen (14) de remplissage, dans lequel le moyen (14) de remplissage comprend au moins un tube (15) délimitant un canal de remplissage (19) disposé à l'extérieur du réservoir (9) contre une première (10a) des plaques de réservoir (9), le réservoir (9) comprenant un canal d'alimentation (22) reliant le canal de remplissage (19) à un volume intérieur du réservoir (9) délimité par les deux plaques de réservoir (10a, 10b), le canal d'alimentation (22) étant formé par des ouvertures (22a, 22b) communiquant entre elles et ménagées respectivement à travers le tube (15) et à travers la première plaque de réservoir (10a), **caractérisé en ce que** les ouvertures (22a, 22b) sont chacune composées de deux trous (23a, 23b) et (24a, 24b) adjacents.

2. Réservoir (9) selon la revendication 2, dans lequel le canal de remplissage (19) s'étend dans un plan principal orienté parallèlement à un plan général (P1) des plaques de réservoir (10a, 10b), et en ce que le canal d'alimentation (22) s'étend selon un axe orienté transversalement au plan général (P1) des plaques de réservoir (10a, 10b).

3. Réservoir (9) selon la revendication 1, dans lequel est prévu un moyen de positionnement du tube (15) sur la première plaque de réservoir (10a).

4. Réservoir (9) selon la revendication 3, dans lequel le moyen de positionnement est formé par au moins un collet (23a, 23b) bordant au moins une première ouverture (22b) et emboîté à l'intérieur d'une deuxième ouverture (22a).

5. Réservoir (9) selon la revendication 4, **caractérisé en ce que** le collet (23a, 23b) est ménagé en saillie de la première plaque de réservoir (10a) vers l'extérieur du réservoir (9).

6. Réservoir (9) selon l'une quelconque des revendications 3 à 5, dans lequel le moyen de positionnement est configuré pour qu'un axe longitudinal du canal de remplissage (19) soit transversal à un axe longitudinal des plaques de réservoirs (10a, 10b).

7. Réservoir (9) selon l'une quelconque des revendications 1 à 6, **caractérisé en ce que** le tube (15) est rapporté contre une assise (16) ménagée à la face extérieure de la première plaque de réservoir (10a).

8. Réservoir (9) selon la revendication 7, **caractérisé en ce que** l'assise (16) délimite une chambre d'alimentation (17) du réservoir (9) depuis le canal d'alimentation (22) vers une réserve (18) s'étendant en prolongement de la chambre d'alimentation (17) suivant un plan d'extension longitudinal de la première plaque de réservoir (10a).

9. Réservoir (9) selon la revendication 8, dans lequel, suivant une direction perpendiculaire au plan général (P1) de la première plaque de réservoir (10a), des dimensions cumulées (a, b) de la chambre d'alimentation (17) et du tube (15) sont au plus égales à une dimension (c) de la réserve (18).

10. Réservoir (9) selon l'une quelconque des revendications 1 à 9, dans lequel le moyen (14) de remplissage comprend au moins un embout de raccordement (15b) qui s'étend au-delà d'une dimension transversale des plaques de réservoir (10a, 10b) et qui est configuré pour mettre en communication le canal de remplissage (19) avec un circuit extérieur d'approvisionnement (20) du réservoir (9) en matériau à changement de phase.

11. Réservoir (9) selon la revendication 10, dans lequel une extrémité distale (21a) du canal de remplissage (19) est fermée par déformation de ses bords et en ce qu'une extrémité proximale (21b) de l'embout de raccordement (15b) est fermée indifféremment par apport d'un bouchon ou par déformation de ses bords.

12. Réservoir (9) selon l'une quelconque des revendications précédentes, **caractérisé en ce que** la première plaque de réservoir (10a) est agencée en coque (11) ouverte sur la deuxième plaque de réservoir (10b), la coque (11) délimitant le volume du réservoir (9) et étant scellée par son bord périphérique (13) entourant le volume du réservoir (9) à la deuxième plaque de réservoir (10b).

13. Echangeur de chaleur (1) d'une installation de conditionnement d'air d'un véhicule, muni d'au moins un réservoir (9) conforme à l'une quelconque des revendications précédentes.

14. Echangeur de chaleur (1) selon la revendication 13, comprenant au moins un conduit (3b) de circulation de fluide délimité par au moins une première plaque de conduit (6a) et par une deuxième plaque de conduit (6b), dans lequel la deuxième plaque de réservoir (10b) est l'une des plaques de conduit (6a, 6b).

15. Echangeur de chaleur (1) selon l'une quelconque des revendications 13 ou 14, **caractérisé en ce que** la première plaque de réservoir (10a) est reliée thermiquement à un deuxième conduit (3a) délimité par une troisième plaque de conduit (5a) et par une quatrième plaque de conduit (5b) adjacente.

16. Echangeur de chaleur selon la revendication 13, comprenant au moins un premier conduit (3b) de circulation de fluide délimité par au moins une première plaque de conduit (6a) et par une deuxième plaque de conduit (6b), ainsi qu'un deuxième conduit (3a) délimité par une troisième plaque de conduit (5a) et par une quatrième plaque de conduit (5b), et dans lequel la deuxième plaque de réservoir (10b) est distincte de l'une quelconque des plaques de conduits (5a, 5b, 6a, 6b).

17. Procédé de remplissage d'un réservoir (9) conforme à l'une quelconque des revendications 1 à 12 ou intégré à un échangeur de chaleur (1) conforme à l'une quelconque des revendications 13 à 16, **caractérisé en ce que** le remplissage du réservoir (9) est opéré par aspiration du matériau à changement de phase depuis le réservoir (9), par suite d'une mise en dépression du réservoir (9).

18. Procédé de remplissage d'un réservoir (9) selon la revendication 17, **caractérisé en ce qu'**il comprend les opérations suivantes :
-) raccorder le moyen (14) de remplissage à un appareil générateur de dépression (28),
-) mettre en dépression le réservoir (9) par aspiration de l'air qu'il contient à travers le canal d'alimentation (22) et le canal de remplissage (19),
-) placer le tube (15) en communication avec une source de matériau à changement de phase (29), en provoquant par aspiration le remplissage du réservoir (9) depuis la source de matériau à changement de phase (29), sous l'effet de sa mise en dépression,
-) obturer une extrémité proximale (21b) d'un embout de raccordement (15b).

## Patentansprüche

1. Behälter (9) für Phasenwechselmaterial für einen Wärmetauscher (1) einer Klimaanlage eines Fahrzeugs, wobei der Behälter (9) zwischen zwei Behälterplatten (10a, 10b) ausgebildet ist und mit einem Füllmittel (14) versehen ist, wobei das Füllmittel (14) wenigstens ein einen Füllkanal (19) begrenzendes Rohr (15) umfasst, das außerhalb des Behälters (9) an einer ersten (10a) der Platten des Behälters (9) angeordnet ist, wobei der Behälter (9) einen Zuführungskanal (22) umfasst, der den Füllkanal (19) mit einem Innenvolumen des Behälters (9) verbindet, das von den zwei Behälterplatten (10a, 10b) begrenzt wird, wobei der Zuführungskanal (22) von Öffnungen (22a, 22b) gebildet wird, die miteinander in Verbindung stehen und durch das Rohr (15) bzw. durch die erste Behälterplatte (10a) hindurch ausgebildet sind, **dadurch gekennzeichnet, dass** die Öffnungen (22a, 22b) jeweils aus zwei benachbarten Löchern (23a, 23b) und (24a, 24b) bestehen.

2. Behälter (9) nach Anspruch 2, wobei sich der Füllkanal (19) in einer Hauptebene erstreckt, die parallel zu einer allgemeinen Ebene (P1) der Behälterplatten (10a, 10b) ausgerichtet ist, und dadurch, dass sich der Zuführungskanal (22) entlang einer Achse erstreckt, die quer zu der allgemeinen Ebene (P1) der Behälterplatten (10a, 10b) ausgerichtet ist.

3. Behälter (9) nach Anspruch 1, wobei ein Mittel zur Positionierung des Rohres (15) auf der ersten Behälterplatte (10a) vorgesehen ist.

4. Behälter (9) nach Anspruch 3, wobei das Positionierungsmittel von wenigstens einem Bund (23a, 23b) gebildet wird, der wenigstens eine erste Öffnung (22b) umrandet und in das Innere einer zweiten Öffnung (22a) eingesteckt wird.

5. Behälter (9) nach Anspruch 4, **dadurch gekennzeichnet, dass** der Bund (23a, 23b) von der ersten Behälterplatte (10a) zur Außenseite des Behälters (9) hin vorstehend ausgebildet ist.

6. Behälter (9) nach einem der Ansprüche 3 bis 5, wobei das Positionierungsmittel so gestaltet ist, dass eine Längsachse des Füllkanals (19) quer zu einer Längsachse der Behälterplatten (10a, 10b) verläuft.

7. Behälter (9) nach einem der Ansprüche 1 bis 6, **dadurch gekennzeichnet, dass** das Rohr (15) an einen Sitz (16) angesetzt ist, der an der Außenseite der ersten Behälterplatte (10a) ausgebildet ist.

8. Behälter (9) nach Anspruch 7, **dadurch gekennzeichnet, dass** der Sitz (16) eine Kammer zur Versorgung (17) des Behälters (9) vom Zuführungskanal (22) zu einem Vorrat (18) begrenzt, der sich in der Verlängerung der Versorgungskammer (17) entlang einer Längserstreckungsebene der ersten Behälterplatte (10a) erstreckt.

9. Behälter (9) nach Anspruch 8, wobei in einer Richtung, die zur allgemeinen Ebene (P1) der ersten Behälterplatte (10a) senkrecht ist, kumulierte Abmessungen (a, b) der Versorgungskammer (17) und des Rohres (15) höchstens gleich einer Abmessung (c) des Vorrats (18) sind.

10. Behälter (9) nach einem der Ansprüche 1 bis 9, wobei das Füllmittel (14) wenigstens einen Anschlussstutzen (15b) umfasst, welcher sich über eine Querabmessung der Behälterplatten (10a, 10b) hinaus erstreckt und welcher dafür ausgelegt ist, den Füllkanal (19) mit einem äußeren Kreislauf zur Versorgung (20) des Behälters (9) mit Phasenwechselmaterial in Verbindung zu bringen.

11. Behälter (9) nach Anspruch 10, wobei ein distales Ende (21a) des Füllkanals (19) durch Verformung seiner Ränder verschlossen ist, und dadurch, dass ein proximales Ende (21b) des Anschlussstutzens (15b), gleichgültig, ob durch Anbringung eines Stopfens oder durch Verformung seiner Ränder, verschlossen ist.

12. Behälter (9) nach einem der vorhergehenden Ansprüche, **dadurch gekennzeichnet, dass** die erste Behälterplatte (10a) als offene Schale (11) auf der zweiten Behälterplatte (10b) ausgebildet ist, wobei die Schale (11) das Volumen des Behälters (9) begrenzt und durch ihren Umfangsrand (13), der das Volumen des Behälters (9) umgibt, dicht mit der zweiten Behälterplatte (10b) verbunden ist.

13. Wärmetauscher (1) einer Klimaanlage eines Fahrzeugs, welcher mit wenigstens einem Behälter (9) gemäß einem der vorhergehenden Ansprüche versehen ist.

14. Wärmetauscher (1) nach Anspruch 13, welcher wenigstens einen Fluiddurchflusskanal (3b) umfasst, der von wenigstens einer ersten Kanalplatte (6a) und von einer zweiten Kanalplatte (6b) begrenzt wird, wobei die zweite Behälterplatte (10b) eine der Kanalplatten (6a, 6b) ist.

15. Wärmetauscher (1) nach einem der Ansprüche 13 oder 14, **dadurch gekennzeichnet, dass** die erste Behälterplatte (10a) mit einem zweiten Kanal (3a) thermisch verbunden ist, der von einer dritten Kanalplatte (5a) und von einer benachbarten vierten Kanalplatte (5b) begrenzt wird.

16. Wärmetauscher nach Anspruch 13, welcher wenigstens einen ersten Fluiddurchflusskanal (3b), der von wenigstens einer ersten Kanalplatte (6a) und von einer zweiten Kanalplatte (6b) begrenzt wird, sowie einen zweiten Kanal (3a), der von einer dritten Kanalplatte (5a) und von einer vierten Kanalplatte (5b) begrenzt wird, umfasst, und wobei die zweite Behälterplatte (10b) von jeder beliebigen der Kanalplatten (5a, 5b, 6a, 6b) verschieden ist.

17. Verfahren zum Füllen eines Behälters (9), der einem der Ansprüche 1 bis 12 entspricht oder in einen Wärmetauscher (1) gemäß einem der Ansprüche 13 bis 16 integriert ist, **dadurch gekennzeichnet, dass** das Füllen des Behälters (9) durch Absaugung des Phasenwechselmaterials aus dem Behälter (9) im Anschluss an eine Erzeugung eines Unterdrucks im Behälter (9) erfolgt.

18. Verfahren zum Füllen eines Behälters (9) nach Anspruch 17, **dadurch gekennzeichnet, dass** es die folgenden Arbeitsvorgänge umfasst:
-) Anschließen des Füllmittels (14) an eine Vorrichtung zur Erzeugung von Unterdruck (28),
-) Erzeugen von Unterdruck im Behälter (9) durch Absaugung der Luft, welche er enthält, durch den Zuführungskanal (22) und den Füllkanal (19),
-) Herstellen einer Verbindung des Rohres (15) mit einer Quelle von Phasenwechselmaterial (29), indem durch Absaugung das Füllen des Behälters (9) aus der Quelle von Phasenwechselmaterial (29) unter der Wirkung der Erzeugung von Unterdruck in ihm hervorgerufen wird,
-) Verschließen eines proximalen Endes (21b) eines Anschlussstutzens (15b).

## Claims

1. Phase-change material reservoir (9) for a heat exchanger (1) of an air-conditioning installation of a vehicle, the reservoir (9) being arranged between two reservoir plates (10a, 10b) and being provided with a filling means (14), wherein the filling means (14) comprises at least one tube (15) delimiting a filling channel (19) disposed outside the reservoir (9) against a first (10a) of the plates of the reservoir (9), the reservoir (9) comprising a feed channel (22) linking the filling channel (19) to an internal volume of the reservoir (9) delimited by the two reservoir plates (10a, 10b), the feed channel (22) being formed by openings (22a, 22b) that communicate with one another and are formed respectively through the tube (15) and through the first reservoir plate (10a), **characterized in that** the openings (22a, 22b) are each formed by two adjacent holes (23a, 23b) and (24a, 24b).

2. Reservoir (9) according to Claim 2, wherein the filling channel (19) extends in a main plane oriented parallel to a general plane (P1) of the reservoir plates (10a, 10b), and in that the feed channel (22) extends along an axis oriented transversely to the general plane (P1) of the reservoir plates (10a, 10b).

3. Reservoir (9) according to Claim 1, wherein a means for positioning the tube (15) on the first reservoir plate (10a) is provided.

4. Reservoir (9) according to Claim 3, wherein the positioning means is formed by at least one collar (23a, 23b) that surrounds at least a first opening (22b) and is fitted inside a second opening (22a).

5. Reservoir (9) according to Claim 4, **characterized in that** the collar (23a, 23b) protrudes from the first reservoir plate (10a) towards the outside of the reservoir (9).

6. Reservoir (9) according to any one of Claims 3 to 5, wherein the positioning means is configured such that a longitudinal axis of the filling channel (19) is transverse to a longitudinal axis of the reservoir plates (10a, 10b).

7. Reservoir (9) according to any one of Claims 1 to 6, **characterized in that** the tube (15) is attached to a seat (16) formed in the external face of the first reservoir plate (10a).

8. Reservoir (9) according to Claim 7, **characterized in that** the seat (16) delimits a feed chamber (17) for the reservoir (9) from the feed channel (22) to a reserve (18) that extends in the continuation of the feed chamber (17) in a longitudinal plane of extension of the first reservoir plate (10a).

9. Reservoir (9) according to Claim 8, wherein, in a direction perpendicular to the general plane (P1) of the first reservoir plate (10a), combined dimensions (a, b) of the feed chamber (17) and of the tube (15) are at most equal to a dimension (c) of the reserve (18).

10. Reservoir (9) according to any one of Claims 1 to 9, wherein the filling means (14) comprises at least one connection end piece (15b) that extends beyond a transverse dimension of the reservoir plates (10a, 10b) and is configured to put the filling channel (19) into communication with an external supply circuit (20) for supplying the reservoir (9) with phase-change material.

11. Reservoir (9) according to Claim 10, wherein a distal end (21a) of the filling channel (19) is closed by deformation of its edges, and in that a proximal end (21b) of the connection end piece (15b) is closed either by addition of a plug or by deformation of its edges.

12. Reservoir (9) according to any one of the preceding claims, **characterized in that** the first reservoir plate (10a) is arranged as an open shell (11) on the second reservoir plate (10b), the shell (11) delimiting the volume of the reservoir (9) and being sealed via its peripheral edge (13) surrounding the volume of the reservoir (9) to the second reservoir plate (10b).

13. Heat exchanger (1) of an air-conditioning installation of a vehicle, provided with at least one reservoir (9) according to any one of the preceding claims.

14. Heat exchanger (1) according to Claim 13, comprising at least one fluid flow duct (3b) delimited by at least one first duct plate (6a) and by a second duct plate (6b), wherein the second reservoir plate (10b) is one of the duct plates (6a, 6b).

15. Heat exchanger (1) according to either one of Claims 13 and 14, **characterized in that** the first reservoir plate (10a) is linked thermally to a second duct (3a) delimited by a third duct plate (5a) and by an adjacent fourth duct plate (5b).

16. Heat exchanger according to Claim 13, comprising at least a first fluid flow duct (3b) delimited by at least one first duct plate (6a) and by a second duct plate (6b), and also a second duct (3a) delimited by a third duct plate (5a) and by a fourth duct plate (5b), and wherein the second reservoir plate (10b) is separate from any one of the duct plates (5a, 5b, 6a, 6b).

17. Method for filling a reservoir (9) according to any one of Claims 1 to 12 or incorporated into a heat exchanger (1) according to any one of Claims 13 to 16, **characterized in that** the reservoir (9) is filled by aspiration of the phase-change material from the reservoir (9) as a result of the pressure in the reservoir (9) being reduced.

18. Method for filling a reservoir (9) according to Claim 17, **characterized in that** it comprises the following operations:
-) connecting the filling means (14) to a pressure-reduction apparatus (28),
-) reducing the pressure in the reservoir (9) by aspiration of the air contained therein through the feed channel (22) and the filling channel (19),
-) putting the tube (15) into communication with a source (29) of phase-change material, causing the reservoir (9) to be filled by aspiration from the source (29) of phase-change material, under the effect of the negative pressure therein,
-) closing off a proximal end (21b) of a connection end piece (15b).
